# EUROPÄISCHE PATENTSCHRIFT

(11) **EP 1 306 209 B1**
(45) Veröffentlichungstag und Bekanntmachung des Hinweises auf die Patenterteilung: **28.07.2004**
(21) Anmeldenummer: 02023869.7
(22) Anmeldetag: 24.10.2002
(51) Int. Cl.: B32B 27/32, B29C 47/06

(54) **Mehrschichtige, durch Coextrusion hergestellte Folie**
Multilayered film produced by co-extrusion
Film multicouche produit par co-extrusion

(30) Priorität: 25.10.2001 DE 10152865
(43) Veröffentlichungstag der Anmeldung: 02.05.2003
(73) Patentinhaber: Nordenia Deutschland Gronau GmbH, 48599 Gronau (DE)
(72) Erfinder: Niepelt, Ralf, 48599 Gronau (DE)
(74) Vertreter: Albrecht, Rainer Harald, Dr.-Ing.

(56) Entgegenhaltungen:
- EP-A- 0 215 333
- EP-A- 1 138 604
- FR-A- 2 705 053
- GB-A- 1 357 950
- US-A- 5 962 092
- US-A- 6 060 136

## Beschreibung

Die Erfindung betrifft eine mehrschichtige, durch Coextrusion hergestellte Folie, insbesondere zur Verwendung als Etikettierfolie, Kaschierfolie oder Verpackungsfolie, mit zwei Außenschichten aus einem Polyolefin, einem Polyolefin-Gemisch oder Olefin-Copolymeren und einem dreischichtigen Kern, der in seinen an die Außenschichten angrenzenden Bereichen aus einer Mischung aus Styrol-Homopolymeren und Styrol-Butadien-Styrol-Blockcopolymeren besteht.

Eine Verpackungsfolie mit den beschriebenen Merkmalen ist aus US 5 962 092 bekannt.

In US 6 060 136 ist eine mehrschichtige Verpackungsfolie beschrieben, die zwei polyolefinische Außenschichten sowie einen aus einer Mischung aus Styrol-Homopolymeren und Styrol-Butadien-Styrol-Blockcopolymeren (SBS-Blockcopolymeren) bestehenden Kern aufweist. Der Kern kann mehrschichtig ausgebildet sein, wobei mindestens eine Schicht aus einer solchen Mischung aus Styrol-Homopolymeren und SBS-Blockcopolymeren besteht. Der Gehalt an Styrol-Homopolymeren in der Mischung beträgt höchstens 50 Gew.-%, wobei der bevorzugte Bereich zwischen 10 und 20 Gew.-% liegt.

Aus EP 1 138 604 A1 sind zweischichtige Kunststoffbehälter bekannt, die eine innere Schicht aus Polyolefin und eine Außenschicht aus einer Mischung aus Styrol-Homopolymeren und Styrol-Butadien-Styrol-Blockcopolymeren aufweist. Die Mischung enthält 40 bis 85 Gew.-% Styrol-Homopolymere.

Zum Fachwissen gehört es auch, bei der Herstellung von Folien Mischungen aus Styrol-Homopolymeren und Styrol-Butadien-Styrol-Blockcopolymeren mit einem Gehalt von mehr als 50 Gew.-% Styrol-Homopolymeren zu verwenden (FR 2 705 053 A1; GB 1 356 950 A).

Der Erfindung liegt die Aufgabe zugrunde, eine Folie mit verbesserter Steifigkeit anzugeben, die zur Verwendung als Etikettierfolie oder Kaschierfolie geeignet ist und sich gut verarbeiten lässt. Bei einer Verwendung als Verpackungsfolie soll die Folie verbesserte Deadfoldeigenschaften und Twisteigenschaften aufweisen.

Ausgehend von einer mehrschichtigen, durch Coextrusion hergestellten Folie mit den eingangs beschriebenen Merkmalen wird die Aufgabe erfindungsgemäß dadurch gelöst, dass die beidseits einer Innenschicht angeordneten und an die Außenschicht angrenzenden Schichten des dreischichtigen Kerns aus einer Mischung bestehen, die mehr als 50 Gew.-% bis maximal 90 Gew.-% Styrol-Homopolymere, Rest Styrol-Butadien-Styrol-Blockcopolymere, enthält, und dass die Innenschicht (3) des Kerns aus einem Polyolefin oder Polyolefin-Gemisch oder Olefin-Copolymeren oder Styrol-Homopolymeren oder einer Mischung aus Styrol-Homopolymeren und Styrol-Butadien-Styrol-Blockcopolymeren, deren Konzentration an Styrol-Homopolymeren größer ist als in den beidseits anschließenden Schichten (4), besteht. Die Folie weist vorzugsweise eine Dicke zwischen 20 und 100 µm auf und kann als Etikettierfolie, Kaschierfolie oder Verpackungsfolie verwendet werden. Durch den erfindungsgemäßen hohen Styrolgehalt nah an den polyolefinischen Außenschichten besitzt die erfindungsgemäße Folie eine große Steifigkeit. Der Zusatz von Styrol-Butadien-Styrol-Blockcopolymeren (SBS-Blockcopolymeren) ist erforderlich, um die Haftung zu dem polyolefinischen Außenschichten herzustellen. Dabei sind überraschend geringe Mengen an SBS-Blockcopolymeren ausreichend. Insofern beträgt der Gehalt an SBS-Blockcopolymeren in den an die Außenschichten angrenzenden Bereichen lediglich zwischen 10 Gew.-% und weniger als 50 Gew.-%.

Der Kern ist dreischichtig ausgebildet, so dass sich insgesamt ein fünfschichtiger Aufbau ergibt. Für den Schichtenaufbau des Kerns ergeben sich verschiedene Möglichkeiten. Eine Ausgestaltung der erfindungsgemäßen Lehre sieht vor, dass die Innenschicht des Kerns aus einem Polyolefin, einem Polyolefin-Gemisch oder Olefin-Copolymeren besteht und dass die beidseitig angrenzenden Schichten aus einer Mischung aus Styrol-Homopolymeren und Styrol-Butadien-Styrol-Blockcopolymeren mit mehr als 50 Gew.-% Styrol-Homopolymeren und mindestens 10 Gew.-% Styrol-Butadien-Styrol-Blockcopolymeren bestehen. Diese Ausführungsform ist besonders vorteilhaft für Folien mit großer Foliendicke. Mit einem bezogen auf das Gewicht der Folie geringen Materialeinsatz an Styrol-Homopolymeren wird eine mehrschichtige Folie gebildet, die sich durch eine gute Steifigkeit, hohe Transparenz und gute Weiterreißeigenschaft in Querrichtung auszeichnet. Daneben bleibt die Folie für die Weiterverarbeitung flexibel und verformbar. Die überraschend gute Steifigkeit wird bei diesem Schichtenaufbau dadurch erreicht, dass Styrol-Homopolymere in hoher Konzentration nah an den Außenschichten konzentriert sind. Eine andere Ausführungsform, vor allem für dünnere Folien, sieht vor, dass der Kern drei Schichten aufweist, die jeweils aus einer Mischung aus Styrol-Homopolymeren und Styrol-Butadien-Styrol-Blockcopolymeren bestehen, wobei die innere Schicht eine höhere Konzentration an Styrol-Homopolymeren aufweist als die beidseitig anschließenden Schichten. Durch die stufenweise sich von außen nach innen erhöhende Konzentration an Styrol-Homopolymeren kann eine hohe Steifigkeit der Folie erreicht werden, und zwar bei gleichzeitig guter Haftung der polyolefinischen Außenschichten. Die innere Schicht des Kerns kann auch aus reinem Styrol-Homopolymer gebildet werden. Mit diesem Schichtenaufbau können dünne Folien hoher Steifigkeit erzeugt werden.

Bei der fünfschichtigen Anordnung der Folie kann das Dickenverhältnis der Schichten zwischen 1:1:1:1:1 und 6:1:6:1:6 gebildet werden.

Vorzugsweise bestehen die Außenschichten aus Polyethylen oder einem Ethylen-Copolymer. Besonders gut verarbeitbar, dazu als Siegelschicht gut geeignet ist LLDPE (= linear low density polyethylene).

Wenigstens eine der Schichten kann zusätzlich Pigmente und/oder Füllstoffe enthalten. Ferner kann eine zusätzliche Schicht auf eine der Außenschichten aufgebracht sein. Hierzu eignen sich beispielsweise Klebstoffschichten oder bedruckbar ausgelegte Schichten. Auch können die Außenschichten physikalisch (z. B. durch Corona-Behandlung) oder chemisch in an sich bekannter Weise nachbehandelt werden, so dass ihre Verklebbarkeit und/oder ihre Bedruckbarkeit verbessert sind.

Die erfindungsgemäße mehrschichtige Folie hat ein breites Anwendungsspektrum. Sie eignet sich als Etikettierfolie, als Verpackungsfolie, hier insbesondere als Twistfolie für Bonbons und als Folie für Verpackungsbeutel, aber auch als Kaschierfolie. Im Unterschied zu Blend-Folien, bei denen Mischungen aus Polyolefinen und Polystyrol verwendet werden, besitzt die erfindungsgemäße Folie eine hohe Transparenz, was für viele Anwendungen von Vorteil ist.

Im Folgenden wird die Erfindung anhand einer lediglich ein Ausführungsbeispiel darstellenden Zeichnung erläutert. Es zeigen schematisch:
- **Fig. 1:**: einen Schnitt durch eine erfindungsgemaß ausgebildete fünfschichtige Folie,
- **Fig. 2:**: ein weiteres Ausführungsbeispiel der fünfschichtigen Folie.

In den Figuren sind mehrschichtige, durch Coextrusion hergestellte Folien dargestellt, die als Etikettierfolie, Kaschierfolie oder Verpackungsfolie eingesetzt werden können. Die Folien bestehen jeweils aus zwei Außenschichten 1 aus einem Polyolefin, einem Polyolefin-Gemisch oder Olefin-Copolymeren und einem Kern 2, der zumindest in an die Außenschichten angrenzenden Bereichen aus einer Mischung aus Styrol-Homopolymeren und Styrol-Butadien-Styrol-Blockcopolymeren besteht. Dabei enthält die Mischung mehr als 50 Gew.-% bis maximal 90 Gew.-% Styrol-Homopolymere, Rest Styrol-Butadien-Styrol-Blockcopolymere (SBS-Blockcopolymere). Der hohe Gehalt an Styrol-Homopolymeren, insbesondere in den an die Außenschichten angrenzenden Bereichen, verleiht der Folie eine hohe Steifigkeit. Die Styrol-Butadien-Styrol-Blockcopolymere, die in der Mischung in einer Menge von mindestens 10 Gew.-% eingesetzt werden, sind erforderlich für die Haftung der polyolefinischen Außensehichten 1 am Kern 2.

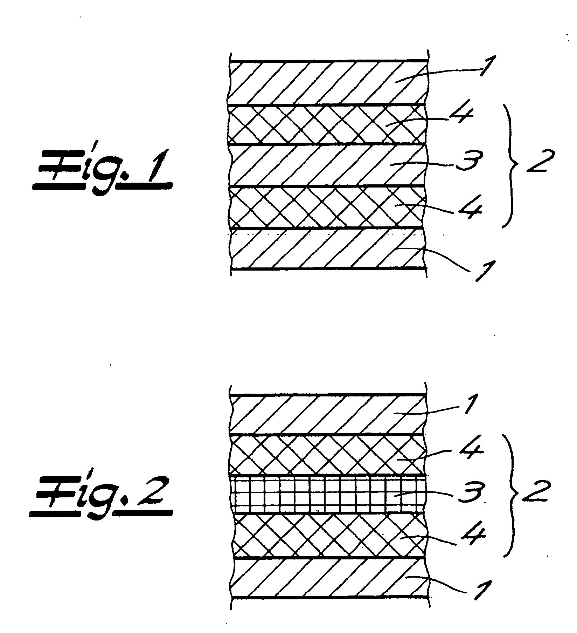

Die in Fig. 1 dargestellte Folie weist zwei Außenschichten 1 aus einem Polyolefin, einem Polyolefin-Gemisch und/oder Olefin-Copolymeren sowie einen dreischichtig ausgebildeten Kern 2 auf. Die Innenschicht 3 des Kerns 2 besteht aus einem Polyolefin, einem Polyolefin-Gemisch oder Olefin-Copolymer. Die beidseitig angrenzenden Schichten 4 bestehen aus einer Mischung aus Styrol-Homopolymeren und SBS-Blockcopolymeren mit mehr als 50 Gew.-% Styrol-Homopolymeren und mindestens 10 Gew.-% SBS-Blockcopolymeren.

Im Ausführungsbeispiel der Fig. 2 ist ebenfalls eine mehrschichtige Folie mit zwei Außenschichten 1 aus einem Polyolefin, einem Polyolefin-Gemisch und/oder Olefin-Copolymer sowie einem dreischichtig ausgebildeten Kern 2 dargestellt. Die an die Außenschichten 1 angrenzenden Schichten 4 des Kerns 2 bestehen aus einer Mischung Styrol-Homopolymeren und SBS-Blockcopolymeren, wobei der Anteil an Styrol-Homopolymeren mehr als 50 Gew.-% bis maximal 90 Gew.-% beträgt. Die innere Schicht 3 des Kerns 2 besteht aus Polystyrol-Homopolymer oder aus einer Mischung aus Styrol-Homopolymeren und SBS-Blockcopolymeren, wobei die Konzentration an Styrol-Homopolymeren größer ist als in den beidseitig anschließenden Schichten.

Die anhand der Fig. 1 und 2 beschriebenen Folien können auf einer der Außenschichten eine zusätzliche Klebstoffschicht oder eine zusätzliche Beschichtung zur Verbesserung der Bedruckbarkeit aufweisen.

### Beispiel 1:

Auf einer Blasfolienextrusionsanlage (Düsendurchmesser 315 mm) wird eine Fünfschichtfolie coextrudiert, wobei die Außenschichten aus reinem Polyethylen (LLDPE) mit einer Dichte von 0,918 bis 0,940 g/cm³ bestehen. Der Schmelzeindex liegt zwischen 0,7 bis 4 g/10 Minuten bei 190° C und bei 2,16 kg. Der dreischichtige Kern weist eine innere Schicht aus Polypropylen-Recyclat sowie beidseitig angrenzende Schichten aus einem Gemisch aus SBS-Blockcopolymeren mit Polystyrol auf. Die Gesamtdicke der Mehrschichtfolie beträgt 50 µm, wobei alle Schichten eine Dicke von 10 µm aufweisen.

### Beispiel 2:

Das Beispiel betrifft eine fünfschichtige Folie mit Außenschichten aus reinem Polyethylen, deren Dicke jeweils 5 µm beträgt. Der dreischichtige Kern weist eine innere Schicht aus einem Polystyrol-Homopolymer und beidseitig angrenzende Schichten aus einer Mischung von Polystyrol und SBS-Blockcopolymeren auf. Jede Schicht des Kerns ist 7 µm dick.

## Patentansprüche

1. Mehrschichtige, durch Coextrusion hergestellte Folie, insbesondere zur Verwendung als Etikettierfolie, Kaschierfolie oder Verpackungsfolie, mit zwei Außenschichten (1) aus einem Polyolefin, einem Polyolefin-Gemisch oder Olefin-Copolymeren und einem dreischichtigen Kern (2), der in seinen an die Außenschichten (1) angrenzenden Bereichen aus einer Mischung aus Styrol-Homopolymeren und Styrol-Butadien-Styrol-Blockcopolymeren besteht, **dadurch gekennzeichnet, dass** die beidseits einer Innenschicht (3) angeordneten und an die Außenschichten (1) angrenzenden Schichten (4) des Kerns (2) aus einer Mischung bestehen, die mehr als 50 Gew.-% bis maximal 90 Gew.-% Styrol-Homopolymere, Rest Styrol-Butadien-Styrol-Blockcopolymere, enthält, und dass die Innenschicht (3) des Kerns aus einem Polyolefin oder Polyolefin-Gemisch oder Olefin-Copolymeren oder Styrol-Homopolymeren oder einer Mischung aus Styrol-Homopolymeren und Styrol-Butadien-Styrol-Blockcopolymeren, deren Konzentration an Styrol-Homopolymeren größer ist als in dem beidseits anschließenden Schichten (4), besteht.

2. Mehrschichtige Folie nach Anspruch 1, **dadurch gekennzeichnet, dass** die Schichtdicken der fünfschichtigen Anordnung ein Dickenverhältnis aufweisen, welches zwischen 1:1:1:1:1 und 6:1:6:1:6 liegt.

3. Mehrschichtige Folie nach Anspruch 1 oder 2, **dadurch gekennzeichnet, dass** die Außenschichten (1) aus Polyethylen oder einem Ethylen-Copolymer bestehen.

4. Mehrschichtige Folie nach Anspruch 1 bis 3, **dadurch gekennzeichnet, dass** wenigstens eine der Schichten Pigmente und/oder Füllstoffe enthält.

5. Mehrschichtige Folie nach einem der Ansprüche 1 bis 4, **dadurch gekennzeichnet, dass** auf einer der Außenschichten (1) eine Klebstoffschicht oder eine zusätzliche Schicht mit bedruckbarer Oberfläche angeordnet ist.

## Claims

1. A multi-layer film produced by coextrusion, particularly for use as a labelling film, a laminating film or a packaging film, having two outer layers (1) of a polyolefin, a polyolefin mixture or olefin copolymers, and having a three-layer core (2), which in its regions adjoining the outer layers (1) consists of a mixture of styrene homopolymers and styrene-butadiene-styrene block copolymers, **characterised in that** the layers (4) of the core (2) which are disposed on both sides of an inner layer (3) and which adjoin the outer layers (1) consist of a mixture which contains from more than 50 % by weight up to a maximum of 90 % by weight of styrene homopolymers, balance styrene-butadiene-styrene block copolymers, and that the inner layer (3) of the core consists of a polyolefin or polyolefin mixture or of olefin copolymers or of styrene homopolymers, or of a mixture of styrene homopolymers and styrene-butadiene-styrene block copolymers, in which the concentration of styrene homopolymers is higher than that in the adjoining layers (4) on both sides.

2. A multi-layer film according to claim 1, **characterised in that** the thickness ratio of the layer thicknesses of the five-layer arrangement ranges between 1:1:1:1:1 and 6:1:6:1:6.

3. A multi-layer film according to claim 1 or 2, **characterised in that** the outer layers (1) consist of polyethylene or of an ethylene copolymer.

4. A multi-layer film according to claims 1 to 3, **characterised in that** at least one of the layers contains pigments and/or fillers.

5. A multi-layer film according to any one of claims 1 to 4, **characterised in that** an adhesive layer or an additional layer which has a printable surface is disposed on one of the outer layers (1).

## Revendications

1. Feuille multicouche, fabriquée par coextrusion, destinée à être utilisée en particulier comme feuille d'étiquetage, feuille de doublage ou feuille d'emballage, comportant deux couches extérieures (1) en une polyoléfine, un mélange de polyoléfines ou en copolymères d'oléfine, ainsi qu'un noyau (2) à trois couches qui est constitué, dans ses zones adjacentes aux couches extérieures (1), d'un mélange d'homopolymères de styrène et de copolymères en masse de styrène-butadiène-styrène, **caractérisé en ce que** les couches (4) du noyau (2), disposées des deux côtés d'une couche intérieure (3) et adjacentes aux couches extérieures (1), sont constituées d'un mélange qui contient plus de 50 % en poids jusqu'à 90 % en poids au maximum d'homopolymères de styrène, le restant étant des copolymères en masse de styrène-butadiène-styrène, et **en ce que** la couche intérieure (3) du noyau est constituée d'une polyoléfine ou d'un mélange de polyoléfines ou de copolymères d'oléfine ou d'homopolymères de styrène ou d'un mélange d'homopolymères de styrène et de copolymères en masse de styrène-butadiène-styrène dont la concentration en homopolymères de styrène est supérieure à celle des couches (4) se raccordant des deux côtés.

2. Feuille multicouche selon la revendication 1, **caractérisée en ce que** les épaisseurs des couches de l'ensemble des cinq couches présentent un rapport d'épaisseur qui se situe entre 1:1:1:1:1 et 6:1:6:1:6.

3. Feuille multicouche selon la revendication 1 ou 2, **caractérisée en ce que** les couches extérieures (1) sont constituées de polyéthylène ou d'un copolymère d'éthylène.

4. Feuille multicouche selon les revendications 1 à 3, **caractérisée en ce qu'**au moins l'une des couches contient des pigments et/ou des charges.

5. Feuille multicouche selon l'une des revendications 1 à 4, **caractérisée en que** sur l'une des couches extérieures (1) est disposée une couche de colle ou une couche supplémentaire à surface pouvant être imprimée.
